(19)

Europäisches
Patentamt
European
Patent Office
Office européen
des brevets

(11) **EP 3 333 414 A1**

(12) **EUROPEAN PATENT APPLICATION**
published in accordance with Art. 153(4) EPC

(43) Date of publication:
**13.06.2018 Bulletin 2018/24**

(21) Application number: **16833128.8**

(22) Date of filing: **05.08.2016**

(51) Int Cl.:
**F02P 23/04** (2006.01)  **F02P 3/01** (2006.01)
**F02P 15/00** (2006.01)

(86) International application number:
**PCT/JP2016/073084**

(87) International publication number:
**WO 2017/022849 (09.02.2017 Gazette 2017/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.08.2015 JP 2015156406**

(71) Applicant: **Imagineering, Inc.**
**Kobe-shi, Hyogo 6500-047 (JP)**

(72) Inventors:
• **IKEDA Yuji**
**Kobe-shi**
**Hyogo 650-0047 (JP)**
• **KANBARA Seiji**
**Kobe-shi**
**Hyogo 650-0047 (JP)**

(74) Representative: **Haseltine Lake LLP**
**Lincoln House, 5th Floor**
**300 High Holborn**
**London WC1V 7JH (GB)**

(54) **MIXER**

(57) To reduce a length in a longitudinal direction of a mixer, and to provide a mixer that is attachable even in a small space for mounting. The mixer comprises an electromagnetic wave input terminal 6 configured to receive the electromagnetic wave from the electromagnetic wave oscillator, a high voltage pulse input terminal 5 provided separately from the electromagnetic wave input terminal 6 and configured to receive the high voltage pulse from the high voltage pulse generator, a high voltage pulse output terminal 50 configured to output the electromagnetic wave and the high voltage pulse to the ignition device, an electromagnetic wave leakage prevention structure 3 arranged between the high voltage pulse input terminal 5 and the high voltage pulse output terminal 50 and arranged in an axis similar with both the terminals, an insulator 4 surrounding the electromagnetic wave leakage prevention structure 3 and the high voltage pulse output terminal 50, a cylindrical conductive member surrounding a part of the insulator 4, the cylindrical conductive member forming a resonator 2 connected to the electromagnetic wave input terminal 6, an inner conductor member 6a of the electromagnetic wave input terminal 6 is exposed toward an annular space 20 inside the resonator 2, and an impedance matching adjuster 7 is arranged inside the resonator 2.

FIG 1

EP 3 333 414 A1

**Description**

**TECHNICAL FIELD**

The present invention relates to a mixer for supplying a discharge pulse voltage and an electromagnetic wave into an ignition device of an internal combustion engine.

**BACKGROUND ART**

Generally, ignition to the gas mixture in the internal combustion engine is performed by spark discharge of the spark plug, but means for achieving secure ignition even through in high-EGR, lean-burn, by irradiating the electromagnetic wave (microwave) to the plasma generated by the spark discharge in order to increase the plasma volume, is suggested (referring to Patent Document 1).

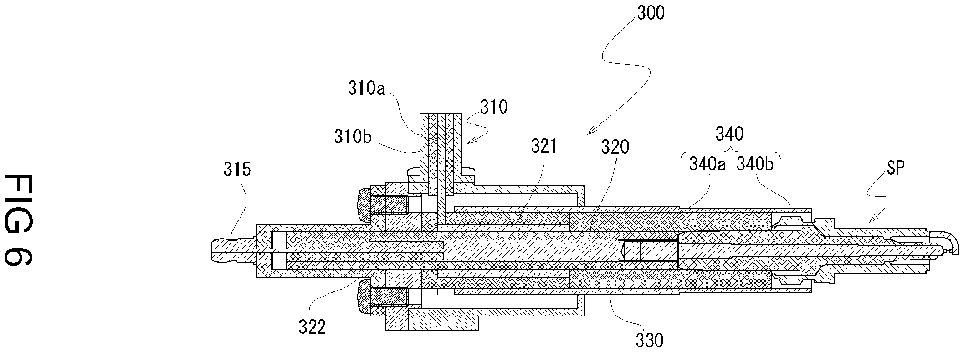

According to the technique disclosed in the Patent Document 1, the mixer which mixes the pulse voltage energy and the electromagnetic wave energy into the same transmission line, is provided. The mixer 300, as illustrated in Fig. 6, includes a first input terminal 310 configured to receive an electromagnetic wave, a second input terminal 315 configured to receive a pulse voltage, a mixing output terminal 340 configured to output the pulse voltage and the electromagnetic wave, a stick-type first conductive member 320 connected electrically to the second input terminal 315 at one end and connected electrically to an inner conductor 340a of the mixing output terminal at another end, a cylindrical second conductive member 321 surrounding the first conductive member 320 spaced with an interval, arranged on an axis similar with the first conductive member 320, and connected electrically to an inner conductor 310a of the first input terminal 310, and a cylindrical third conductive member 330 configured to store the first conductive member 320 and the second conductive member 321 therein together in an interval forming manner between the first conductive member 320 and the second conductive member 321, arranged on the axis similar to the first conductive member 320 and the second conductive member 321, and connected electrically to an outer conductor 310b of the first input terminal 310 and an outer conductor 340b of the mixing output terminal 340 respectively.

The mixer 300 includes a resonator of a space gap 322 between the second conductive member 321 and the third conductive member 330 in the parallel direction (longitudinal direction) of the axis center, and an impedance matching is attained in order to be capacitively-coupled of the second conductive member 321 to the first conductive member 320, and thereby, the electromagnetic wave supplied from the first input terminal 310 is passed to the spark plug SP via the first conductive member 320 through which the pulse voltage is flown. Moreover, a leakage prevention means 320 (choke structure in the figure example) configured to prevent the electromagnetic wave leakage toward the second input terminal 315 side is provided between the second input terminal 315 and the first conductive member 320.

**PRIOR ART DOCUMENTS**

**PATENT DOCUMENT(S)**

Patent Document 1: Patent No. 5632993

**SUMARRY OF INVENTION**

**PROBLEM TO BE SOLVED BY INVENTION**

However, since the mixer 300 has the resonation structure at the same axis in the longitudinal direction of the mixture 300, and it is configured to attain an impedance matching in this condition, there is a problem that a device strength as a whole in the longitudinal direction is increased, and an interference with the stay for jointing to the engine frame or other devices occurs according to mounted internal combustion engine type.

The present invention is made from the above viewpoints, and an objective is to reduce a length in the longitudinal direction of a mixer and to provide a mixer that is attachable even though in a small space to be mounted.

**MEANS FOR SOLVING THE ABOVE PROBLEMS**

For solving the above problems, a mixer for receiving a high voltage pulse from a high voltage pulse generator and an electromagnetic wave from an electromagnetic wave oscillator via individual input terminals and supplying the high voltage pulse and the electromagnetic wave into an ignition device, the mixer comprises an electromagnetic wave input terminal configured to receive the electromagnetic wave from the electromagnetic wave oscillator, a high voltage pulse input terminal provided separately from the electromagnetic wave input terminal and configured to receive the high voltage pulse from the high voltage pulse generator, a high voltage pulse output terminal configured to output the electromagnetic wave and the high voltage pulse to the ignition device, an electromagnetic wave leakage prevention structure arranged between the high voltage pulse input terminal and the high voltage pulse output terminal, an insulator surrounding the electromagnetic wave leakage prevention structure and the high voltage pulse output terminal, and a cylindrical conductive member surrounding a part of the insulator. The cylindrical conductive member forms a resonator connected to the electromagnetic wave input terminal, and an impedance matching adjuster is arranged inside the resonator.

The mixer of the present invention is not the same-axis-resonation-structure in the parallel direction (longitudinal direction) to the axis center, but a resonation structure in a vertical direction (radial direction) to the axis center is adopted. Thereby, the length of the resonator in the longitudinal direction is reduced, and the mounting work can be performed even though in small size of the mounting space, specifically in a case of the longitudinal direction reduced.

In this case, the impedance matching adjuster can comprise a conductor having a length which is changeable in at least one direction of an axial direction and a direction perpendicular to the axial direction inside the resonator. A resonation frequency is configured to be variable and a passage characteristic of the electromagnetic wave can be adjusted by the impedance matching adjuster that is changeable of length in at least one direction of the axial direction and the direction perpendicular to the axial direction.

In this case, the electromagnetic wave leakage prevention structure can comprise a cylindrical member surrounding the high voltage pulse output terminal. The length in the longitudinal direction can further be reduced by being the electromagnetic wave leakage prevention structure to be formed in chock shape so as to be configured to surround the high voltage pulse output terminal.

In this case, each of the high voltage pulse input terminal, the high voltage pulse output terminal, the electromagnetic wave leakage prevention structure, and the insulator surrounding them can be configured to be detachable and attachable from the mixer. Thereby, a cord for a spark plug, i.e., a peculiar high-tension cable, configured to surround the high voltage pulse output terminal can be used as the electromagnetic wave leakage prevention structure.

## EFFECT OF INVENTION

According to a mixer of the present invention, a length in a longitudinal direction of a resonator can be reduced by adopting a resonation structure in a vertical direction (radial direction) to an axis center. Furthermore, the length in the longitudinal direction of the resonator can significantly be reduced by constituting the electromagnetic wave leakage prevention structure so as to surround a high voltage pulse output terminal, and a mounting work can be performed even through in a small size of a mounting space, specifically in a case of being reduced of a length in the longitudinal direction.

## BRIEF DESCRIPTION OF FIGURES

Fig. 1 shows a partially cross-sectional front view of a mixer of a first present embodiment.
Fig. 2 shows the partially cross-sectional front view of a mixer of a second present embodiment.

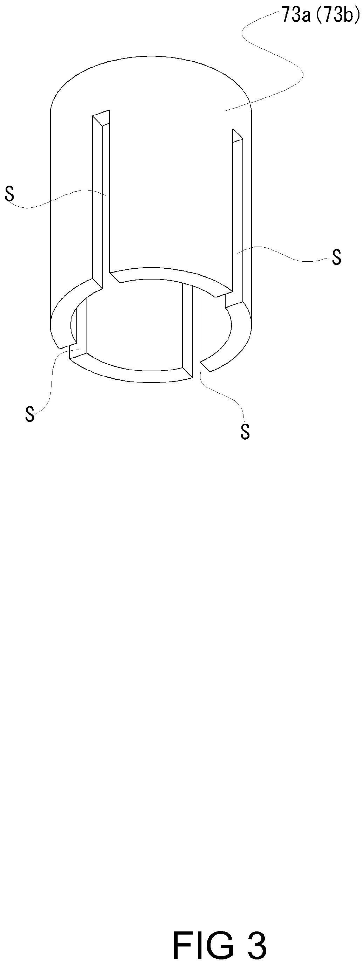

Fig. 3 shows a perspective view illustrating a modification example of a cylindrical pipe that is an impedance matching adjuster of the mixer.
Fig. 4 shows a mixer of a third present embodiment, (a) is a front view of the partially cross section, and (b) is an X-X cross sectional view of (a).
Fig. 5 shows the partially cross-sectional front view of a mixer of a forth present embodiment.
Fig. 6 is the partially cross-sectional front view of the conventional mixer.

## EMBODIMENTS FOR IMPLEMENTING THE INVENTION

In below, embodiments of the present invention are described in details based on figures. Note that, following embodiments are essentially preferable examples, and the scope of the present invention, the application, or the use is not intended to be limited.

## (FIRST EMBODIMENT) MIXER

The first embodiment is a mixer 1 regarding the present invention. The mixer 1 receives a high voltage pulse from a high voltage pulse generator P (including so called "ignition coil". Same as below) and an electromagnetic wave from an electromagnetic wave oscillator MW at individual input terminals, and supplies them into an ignition device, and the mixer 1 comprises an electromagnetic wave input terminal 6, a high voltage pulse input terminal 5, a high voltage pulse output terminal 50, an electromagnetic wave leakage prevention structure 3 arranged between the high voltage pulse input terminal 5 and the high voltage pulse output terminal 50 and arranged in an axis similar to both the terminals, an insulator 4 surrounding the electromagnetic wave leakage prevention structure 3 and the high voltage pulse output terminal 50, and a resonator 2 (radial resonator) formed by a cylindrical member that surrounds the insulator 4 partially. An inner conductor 6a of the electromagnetic wave input terminal 6 is exposed toward an annular space 20 of the resonator 2 (The present embodiment includes a case where the conductor is surrounded by the insulator for the extrusion of the conductor. Same as below.), and an impedance matching adjuster 7 that attains matching between an impedance of the supplied electromagnetic wave (generally, 50Ω in a case of being supplied by a coaxial cable) and an impedance of a spark plug SP, is arranged.

The mixer 1 is a device for supplying the high voltage pulse and the electromagnetic wave into the spark plug in order to achieve a secure ignition even through in high EGR and lean-burn by applying the high voltage pulse from the high voltage pulse generator P to be spark discharge by the spark plug SP, then generate plasma, and irradiating the electromagnetic wave, i.e., microwave to the generated plasma to be increase the plasma volume.

Then, the mixer 1 is formed in the extrusion manner of the inner conductor 6a of the electromagnetic wave input terminal 6 into the annular space 20 inside the resonator 2, and configured to supply the electromagnetic wave into the inside the resonator 2. Moreover, the impedance matching adjuster 7 arranged at the space 20 attains an impedance matching, the supplied electromagnetic wave is coupled to the inner conductor of the spark plug SP (generally, the center electrode of the spark plug SP), and it is configured to irradiate the electromagnetic wave from the tip end side (discharge electrode side opposing to the ground electrode) of the spark plug SP toward the inside the combustion chamber.

The resonator 2 is divided into a part forming the annular space 20 being the supplied electromagnetic wave resonation part and a cylindrical part into which the spark plug SP is inserted. The tip end of the cylindrical part is grounded by contacting the housing part of the spark plug SP, and the supplied electromagnetic wave leakage towards outside is prevented from.

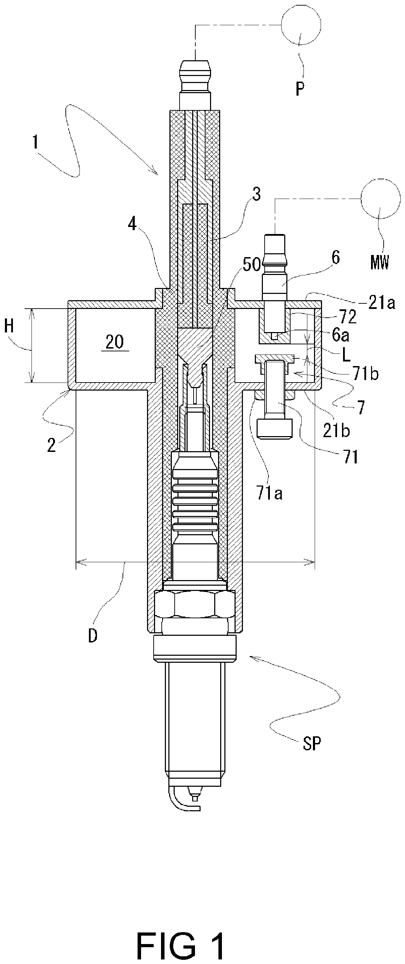

The impedance matching adjuster 7 is, as illustrated in Fig. 1, is arranged at a bottom plate 21b opposed to the electromagnetic wave input terminal 6 provided at a disk-type ceiling plate 21a of the radial resonator 2 that forms the annular space 20 (in the present embodiment, the annular space 20 is formed in an annular manner), and arranged movably in upwards and downwards directions of the figure example in order to be changeable of a distance L from/to the electromagnetic wave input terminal 6. Specifically, the impedance matching adjuster 7 comprises a bolt 71 engaged with a hole for screw formed at the bottom plate 21b, a nut 71a for securing the bolt 71 at the bottom plate 21b, and a dielectric cap 71b covering the tip end of the bolt 71. The size of the dielectric cap 71b, and the shape thereof are not specifically limited, for example, can be formed into the disk-type member having substantially equal diameter with the outer diameter of the electromagnetic wave input terminal 6, in other case, also formed into a shape covering the substantially overall cross-section in a horizontal direction of the annular-type space 20, or a shape covering a cross-sectional predetermined area in the horizontal direction of the space 20.

The impedance matching is attained by adjusting the distance L between the electromagnetic wave input terminal 6 and the surface of the dielectric cap 71b of the impedance matching adjuster 7, also the supplied electromagnetic wave is coupled to the high voltage pulse output terminal 50, and thereby, coupled to the inner conductor of the spark plug SP. Although the coupled electromagnetic wave is flown into the high voltage pulse input terminal 5 side, the leakage of the electromagnetic wave to the upwards than the position of the electromagnetic wave leakage prevention structure 3 is prevented from for the reason that the electromagnetic wave leakage prevention structure 3 is arranged between the high voltage pulse input terminal 5 and the high voltage pulse output terminal 50. The electromagnetic wave leakage prevention structure 3, as illustrated in Fig.1, adopts a cylindrical chock structure having a bottom part configured to open the input terminal side of the spark plug SP, and the chock depth is configured to become $1/4\lambda$ with respect to the wavelength $\lambda$ of the supplied electromagnetic wave.

By adopting such a configuration, the supplied electromagnetic wave is efficiently irradiated from the tip end side of the spark plug SP (discharge electrode opposing to ground electrode) into the inside the combustion chamber.

Moreover, the resonator 2 thereinside forming the annular space 20, is preferably configured to become $D>2\times H$ (cylindrical outer diameter length :D, height: H) in order to be able to mount without interfering with the stay for joint to the engine frame or other device, even if the internal combustion engine has a limitation in length in the longitudinal direction.

## EFFECT OF FIRST EMBODIMENT

A mixer 1 of the present first embodiment can be reduced in length in a longitudinal direction of a resonator by adopting a resonation structure in a vertical direction (radial direction) with respect to an axis center.

## SECOND EMBODIMENT-MIXER

In the mixer 1 of the present second embodiment, the only different point compared to the first embodiment is the arranging position of the impedance matching adjuster 7 and the electromagnetic wave leakage prevention structure 3, and other structures are similar to the first embodiment, and therefore, the explanation thereof is omitted.

It is configured that the electromagnetic wave leakage prevention structure 3 surrounds the high voltage pulse output terminal 50. More specifically, the electromagnetic wave leakage prevention structure 3 adopts a choke structure having a bottom part that opens the input terminal side of the spark plug SP through the insulator arranged between the high voltage pulse output terminal 50 and the input terminal of the spark plug SP in a state where the high voltage pulse output terminal 50 is jointed to the input terminal of the spark plug SP. The choke depth is, as similar to the first embodiment, configured to become 1/4λ with respect to the wavelength λ of the supplied electromagnetic wave.

When the resonator 2 is compared to the first embodiment, an insulator part of the spark plug SP is inserted into a part that forms the annular space 20 being a resonation part of the supplied electromagnetic wave, and the cylindrical part is configured to contact only to the housing of the spark plug (hexagonal portion for mounting to the engine head).

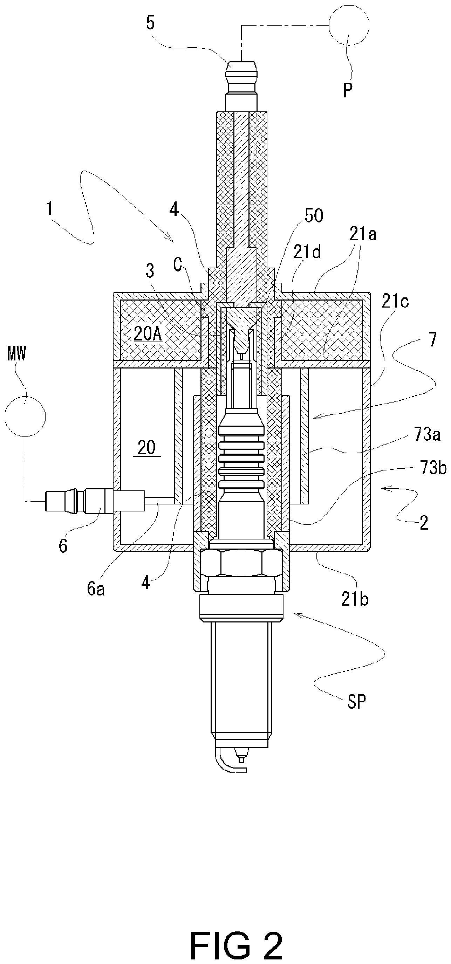

The impedance matching adjuster 7 of the second embodiment, as illustrated in Fig. 2, can become a cylindrical manner pipe 73 that is concentric to the cylindrical space 20. In the present embodiment, the length of the cylindrical manner pipe 73 becomes λ/4 wavelength with respect to the wavelength λ defined by the supplied electromagnetic wave frequency, and the cylindrical manner pipe 73 comprises a first cylindrical pipe 73a arranged in a manner that one end thereof comes into contact with the ceiling plate 21a and a second cylindrical pipe 73b having a smaller diameter than the first cylindrical pipe 73a and arranged in a manner that one end thereof comes into contact with the bottom plate 21b.

In this case, the inner conductor 6a of the electromagnetic wave input terminal 6 is connected to the first cylindrical pipe 73a. A connected position of the inner conductor 6a is not especially limited; however, as illustrated, the connected position of the inner conductor 6 is preferably closer to the opening end of the first cylindrical pipe 73a.

Then, an impedance ("Z" illustrated in below formula 1) that is defined by relative permittivity of the dielectric member that is interposed in the diameter ratio of the inner conductor of the spark plug SP, the first cylindrical pipe 73a, and the second cylindrical pipe 73b, is adjusted by the dielectric member that is interposed between the diameters of the first cylindrical pipe 73a and the second cylindrical pipe 73b so as to increase and enhance the coupling degree of the supplied electromagnetic wave in the impedance matching adjuster 7.

$$Z = \log_{10}(D/d) \times 138/(\varepsilon r)^{\wedge}0.5 \cdots \text{formula 1}$$

where "d" means the outer diameter of the inner conductor, "D" means the inner diameter of the outer conductor, "εr" means the relative permittivity of the dielectric member that is filled with between the inner conductor and the outer conductor.

Accordingly, the impedance matching is attained by two coaxial resonators, the first cylindrical pipe 73a and the second cylindrical pipe 73b, and the supplied electromagnetic wave is emitted from the distal end (the discharge electrode opposed to the ground electrode) side of the spark plug SP to the inside of the combustion chamber.

Moreover, as illustrated in Fig. 2, the ceiling plate 21a of the resonator 2 can be made as a dual structure. In this case, a cylindrical pipe 21d is extended from the ceiling plate 21a at the lower side so as to surround the insulator 4, and a gap space C is provided between the upper ceiling plate 21a and the top end of the cylindrical pipe 21d. By adopting such a structure, the space 20A sandwiched between both the ceiling plates 21a functions as a choke, and the leakage of the electromagnetic wave toward the high voltage pulse input terminal 5 side, is prevented from as well as the electromagnetic wave leakage prevention structure 3. Note that, it is preferable to attain the impedance matching by filling with the dielectric member such as fluorine-based resin and PEEK material to the space 20A.

A slit S extending in the axial direction from the opening end side toward the ceiling plate 21a side can be formed at the circumferential surface of the first cylindrical pipe 73a. The place and number to form the slit S are not specifically limited; however, in the present embodiment example, as illustrated in the figure, it is arranged at four places evenly on the circumferential surface. Furthermore, the slit S can also be formed at the second cylindrical pipe 73b.

Accordingly, the coaxial resonation capacity can be reduced in size and the coupling degree with the center conductor of the spark plug SP can be enhanced by dividing the circumferential surfaces of the first cylindrical pipe 73a and the second cylindrical pipe 73b being the impedance matching adjuster 7 by the slit S.

## -EFFECT OF SECOND EMBODIMENT-

Since the mixer 1 of the present second embodiment is configured to attain the impedance matching by two coaxial resonators, a suitable impedance matching can be attained based on the supplied electromagnetic wave.

**-THIRD EMBODIMENT-MIXER**

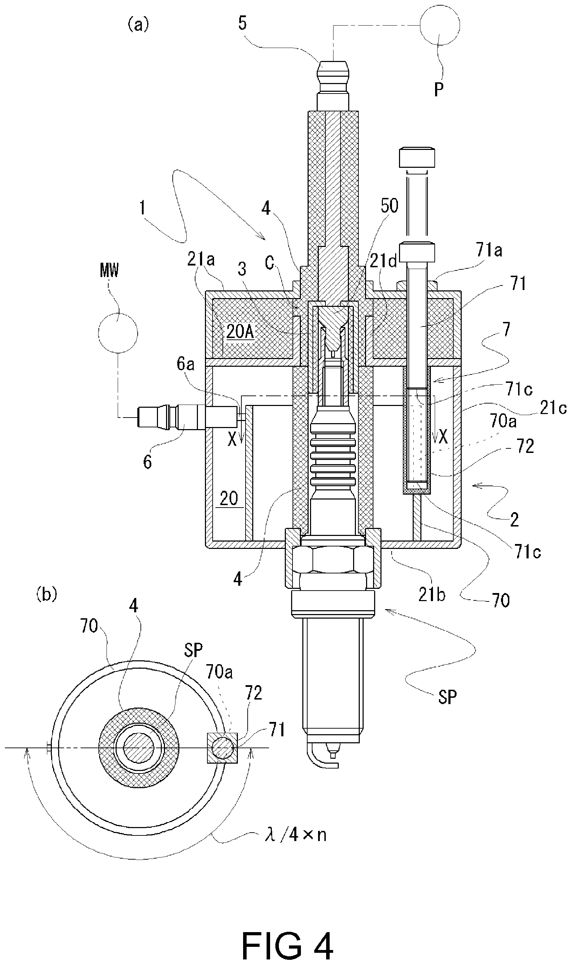

The mixer 1 of the present third embodiment differs from the first and second embodiments only in the impedance matching adjuster 7, other structures are similar to the first and second embodiments, and therefore, the explanation thereof is omitted. As illustrated in Fig. 4, the impedance matching adjuster 7 in the present third embodiment comprises an cylindrical pipe 70 coaxially with an annular space 20, a cylindrical insulator 72 engaged in a notch portion 70a provided at the part facing to the connection part of the cylindrical pipe 70 with the inner conductor 6a of the electromagnetic wave input terminal 6, and a conductive member 71 arranged at the cylindrical insulator 72 so as to move freely back and forth.

The cylindrical pipe 70 is a coupling pipe so as to couple the supplied electromagnetic wave to the center conductor of the spark plug SP, and one end thereof is arranged so as to contact to the bottom plate 21b as well as the second cylindrical pipe 73b of the second embodiment.

Further, as illustrated in Fig. 4(b), it is configured that the distance from the connecting point of the inner conductor 6a to the notch portion 70a provided at the facing position becomes the distance being an integer multiple of $1/4\lambda$ with respect to the supplied-electromagnetic-wave-wavelength $\lambda$, and the connecting point of the inner conductor 6a becomes "node" point of the supplied electromagnetic wave, and the vicinity of the adjuster 7 becomes "anti-node" point of the supplied electromagnetic wave.

The cylindrical insulator 72 that is engaged into the notch portion 70a is not especially limited; however, in the present embodiment, the square-cylindrical-type insulator such as fluorine-based resin or PEEK material is used as illustrated, and it is configured to contact to the lower side ceiling plate 21a.

Further, the conductive member 71 that moves forth and back into the hole of the annular insulator 72 is not especially limited in member; however, a bolt secured via the nut 71a to the ceiling plate 21a at the upper side is used.

When the bottom surface 71c of the bolt being the conductive member 71 is positioned at the above of the top end surface of the cylindrical pipe 70 (as illustrated by two-dot chain line in the figure example), the impedance matching adjuster 7 forms a capacitor between the top end surface of the cylindrical pipe 70 and the conductive member 71, and it functions as a stub when the bottom surface 71c is positioned at the below of the top end surface of the cylindrical pipe 70.

The supplied electromagnetic wave is efficiently irradiated from the tip end (discharge electrode opposed to the ground electrode) side of the spark plug SP toward the inside of the combustion chamber by attaining the impedance matching in such a structure.

**-EFFECT OF THIRD EMBODIMENT-**

In the mixer 1 of the present embodiment, the impedance matching adjuster is constituted by the annular insulator being engaged in the notch portion provided at the facing position to the part connected of the inner conductor of the electromagnetic wave input terminal of the cylindrical pipe that constitutes the coaxial resonator and the conductive member arranged at the annular insulator in freely-moving-forth-and-back manner. Further, the pseudo capacitor and the stub are formed based on the position of the conductive member being arranged, and therefore, the inputted electromagnetic wave impedance can be adjusted minutely.

**-FOURTH EMBODIMENT-MIXER**

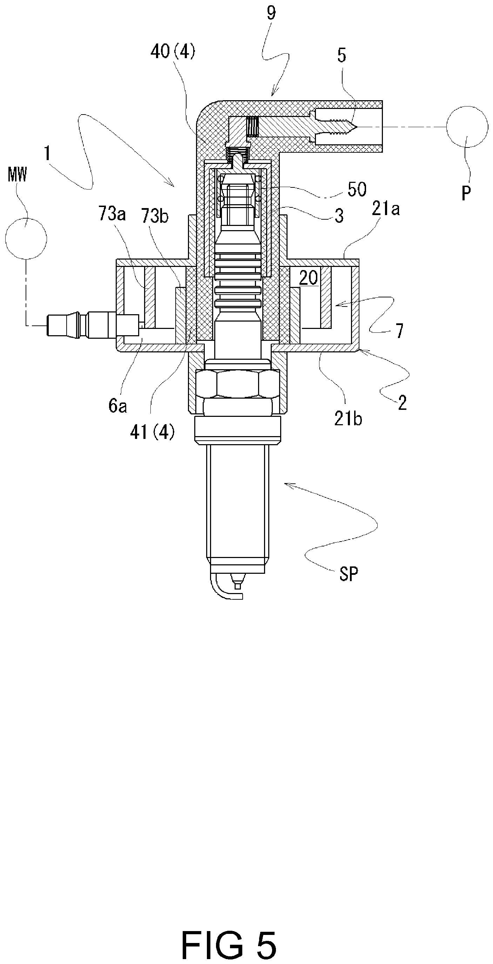

The mixer 1 of the fourth present embodiment, as illustrated in Fig. 5, comprises the high-voltage-pulse-input-terminal 5, the high-voltage-pulse-output-terminal 50, the electromagnetic wave leakage prevention structure 3, and the insulator 40 that surrounds them, so as to attach and detach freely. The impedance matching adjuster 7, as similar to the second embodiment, can become the cylindrical pipe 73 coaxially with the cylindrical space 20. The length of the cylindrical pipe 73 becomes in length of $\lambda/4$ with respect to the wavelength $\lambda$ defined by the supplied electromagnetic wave frequency, and the cylindrical pipe 73 comprises the first cylindrical pipe 73a that is arranged so as to contact to the ceiling plate 21a at one end thereof, and the second cylindrical pipe 73b in smaller diameter than the first cylindrical pipe 73a and arranged so as to contact to the bottom plate 21b at one end thereof; however, it is not limited to the above, and the structure similar to the first embodiment and the second embodiment may be adopted.

The insulator 40 connects electrically the high-voltage-input-terminal 5 for receiving the supply of the high voltage pulse from the high voltage pulse generator P to the high-voltage-output-terminal 50 configured to supply the high voltage pulse into the input terminal of the spark plug SP. Then, the electromagnetic wave leakage prevention structure 3 is configured to surround the high-voltage-pulse-output-terminal 50 as well as the second embodiment. In below, these are collectively together referred to "input terminal 9."

With regard to the center of the space 20, a hole is formed respectively in the center of the ceiling plate 21a and the center of the bottom plate 21b in order that the spark plug SP and the input terminal 9 can be inserted therethrough. As a result, engaged into the hole of the insulator 40(4) of the input terminal 9. The insulator 4 that surrounds the high-voltage-pulse-output-terminal 50 and the electromagnetic wave leakage prevention structure 3, is configured to become somewhat larger in diameter than the hole part, and the material thereof may preferably be a flexible one. The insulator 41 (4) is arranged between the second cylindrical pipe 73b and the input terminal 9 at the space 20. The material of the insulator 41 can be selected as one among kinds of materials such as PEEK material, fluorine-based resin, aluminum, and silicon nitride. The material having the suitable dielectric permittivity is selected in accordance to the supplied electromagnetic wave frequency and etc., and the fine technical adjustment and fitting of the impedance matching adjuster 7 can be performed.

The input terminal 9 provides with a spring inside the conductive path, and the connection to the spark plug SP can be supported. Moreover, an engaging ring being eccentric to the axis center and moving toward the direction perpendicular to the axis center, is arranged at the high-voltage-pulse-output-terminal 50 so as to engage to a step portion of the input terminal of the spark plug SP. Moreover, the high-voltage-pulse-input-terminal 5 is configured to be perpendicular to the axis center of the spark plug SP; however, not limited to this.

**-EFFECT OF FORTH EMBODIMENT-**

The mixer 1 of the present forth embodiment comprises the resonator 2 part and the input terminal 9 part including the high-voltage-pulse-input-terminal 5, the high-voltage-pulse-output-terminal 50, the electromagnetic wave leakage prevention structure 3 and the insulator 40 surrounding them, and therefore, a cost reduction can be achieved by changing a portion of the input terminal 9 into a cord for the spark plug improved at the distal end.

**INDUSTRIAL APPLICABILITY**

As illustrated above, the mixer of the present invention can suitably be used in not only the general internal combustion engine but also in the internal combustion engine in a case of less allowance in the engine outline surrounding.

**NUMERAL SYMBOL EXPLANATION**

| | |
|---|---|
| 1. | Mixer |
| 2. | Resonator |
| 20. | Space |
| 3. | Electromagnetic Wave Leakage Prevention Structure |
| 4. | Insulator |
| 5. | High Voltage Pulse Input Terminal |
| 50. | High Voltage Pulse Output Terminal |
| 6. | Electromagnetic Wave Input Terminal |
| 7. | Impedance Matching Adjuster |
| 70. | Cylindrical Pipe |
| 73. | Cylindrical Pipe |
| 73a. | First Cylindrical Pipe |
| 73b. | Second Cylindrical Pipe |
| P | High Voltage Pulse Generator |
| MW | Electromagnetic Wave Oscillator |
| SP | Spark Plug |

**Claims**

1.  A mixer for receiving a high voltage pulse from a high voltage pulse generator and an electromagnetic wave from an electromagnetic wave oscillator via individual input terminals and supplying the high voltage pulse and the electromagnetic wave into an ignition device, the mixer comprising:

    an electromagnetic wave input terminal configured to receive the electromagnetic wave from the electromagnetic wave oscillator;
    a high voltage pulse input terminal provided separately from the electromagnetic wave input terminal and configured to receive the high voltage pulse from the high voltage pulse generator;
a high voltage pulse output terminal configured to output the electromagnetic wave and the high voltage pulse to the ignition device;
an electromagnetic wave leakage prevention structure arranged between the high voltage pulse input terminal and the high voltage pulse output terminal;
an insulator surrounding the electromagnetic wave leakage prevention structure and the high voltage pulse output terminal; and
a cylindrical conductive member surrounding a part of the insulator,
wherein the cylindrical conductive member forms a resonator connected to the electromagnetic wave input terminal, and
wherein an impedance matching adjuster is arranged inside the resonator.

2. The mixer according to claim 1,
wherein the impedance matching adjuster comprises a conductor having a length which is changeable in at least one direction of an axial direction and a direction perpendicular to the axial direction inside the resonator.

3. The mixer according to claim 1 or claim 2,
wherein the electromagnetic wave leakage prevention structure comprises a cylindrical member surrounding the high voltage pulse output terminal.

4. The mixer according to any one of claims 1 to 3,
wherein each of the high voltage pulse input terminal, the high voltage pulse output terminal, the electromagnetic wave leakage prevention structure, and the insulator surrounding them is configured to be detachable from and attachable to the mixer.

FIG 1

FIG 2

EP 3 333 414 A1

FIG 3

11

(a)

(b)

# FIG 4

FIG 5

FIG 6

## INTERNATIONAL SEARCH REPORT

| International application No. |
| --- |
| PCT/JP2016/073084 |

A. CLASSIFICATION OF SUBJECT MATTER
*F02P23/04*(2006.01)i, *F02P3/01*(2006.01)i, *F02P15/00*(2006.01)i

According to International Patent Classification (IPC) or to both national classification and IPC

B. FIELDS SEARCHED

Minimum documentation searched (classification system followed by classification symbols)
F02P1/00-3/12, 7/00-23/04

Documentation searched other than minimum documentation to the extent that such documents are included in the fields searched
Jitsuyo Shinan Koho          1922-1996    Jitsuyo Shinan Toroku Koho    1996-2016
Kokai Jitsuyo Shinan Koho    1971-2016    Toroku Jitsuyo Shinan Koho    1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2011/016569 A1  (Imagineering, Inc.), 10 February 2011 (10.02.2011), paragraphs [0030] to [0080]; fig. 1 to 5 & CN 102472240 A          & KR 10-2012-0054039 A & EP 2463506 A1            & US 2012/0176723 A1 paragraphs [0067] to [0120]; fig. 1 to 5 & JP 5632993 B2 | 1-4 |
| A | WO 2014/203873 A1  (Imagineering, Inc.), 24 December 2014 (24.12.2014), paragraph [0058]; fig. 5 & EP 3012927 A1          & US 2016/0181765 A1 paragraph [0066]; fig. 5 | 1-4 |

☐ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 October 2016 (25.10.16) | 08 November 2016 (08.11.16) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 5632993 A